# FASCICULE DE BREVET EUROPEEN

(11) **EP 3 810 902 B1**
(45) Date de publication et mention de la délivrance du brevet: **04.01.2023**
(21) Numéro de dépôt: 19795249.2
(22) Date de dépôt: 11.06.2019
(51) Int. Cl.: F01D 11/00, F01D 11/02, F16J 15/44

(54) **JOINT D'ETANCHEITE A LABYRINTHE POUR UNE TURBOMACHINE D'AERONEF**
LABYRINTDICHTUNG FÜR EINE TURBOMASCHINE EINES FLUGZEUGS
LABYRINTH SEAL FOR A TURBOMACHINE OF AN AIRCRAFT

(30) Priorité: 20.06.2018 FR 1855418
(43) Date de publication de la demande: 28.04.2021
(73) Titulaire: SAFRAN AIRCRAFT ENGINES, 75015 Paris (FR)
(72) Inventeur: LAROCHE, Clément, Raphaël, 77550 MOISSY-CRAMAYEL (FR)
(74) Mandataire: Gevers & Orès
(86) Numéro de dépôt international: PCT/FR2019/051400
(87) Numéro de publication internationale: WO 2019/243708

(56) Documents cités:
- EP-A1- 1 413 712
- EP-A1- 2 982 832
- US-A1- 2014 072 415
- US-A1- 2018 010 467

## Description

### DOMAINE TECHNIQUE

La présente invention concerne un joint d'étanchéité à labyrinthe pour une turbomachine, en particulier d'aéronef.

### ETAT DE L'ART

L'état de la technique comprend notamment les documents EP-A1-1413712, US-A1-2018/010467 et US-A1-2014/072415.

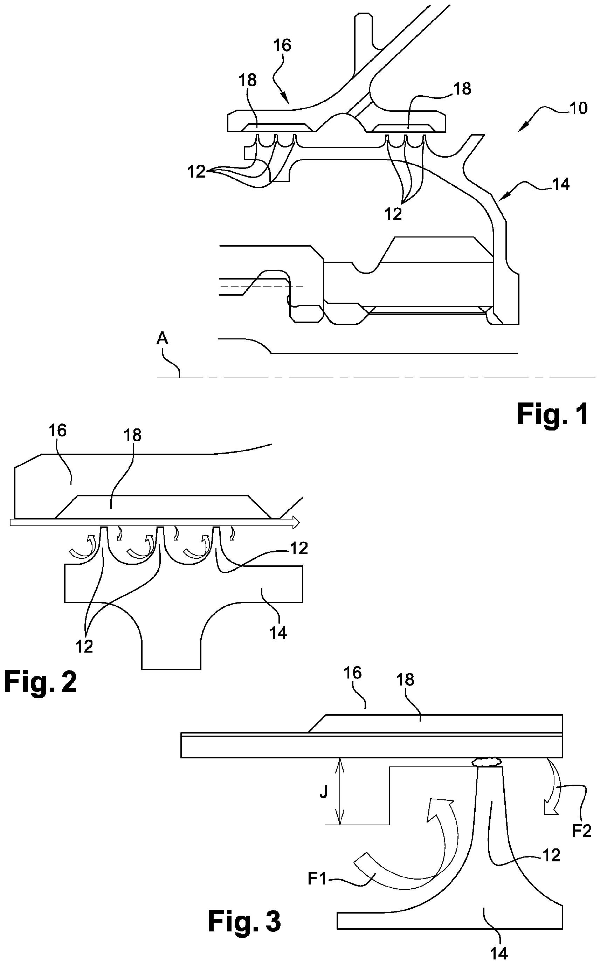

Il est connu d'équiper une turbomachine de joints d'étanchéité à labyrinthe qui sont des joints d'étanchéité dont l'étanchéité dynamique est assurée par des léchettes tournantes. Comme cela est représenté à la figure 1, les léchettes 12 sont portées par un élément de rotor 14 de la turbomachine 10, qui tourne à l'intérieur d'un élément de stator 16 et sont entourées par des éléments abradables 18 tels que des blocs ou un revêtement de matière abradable portés par cet élément de stator 16.

Les éléments abradables 18 ont pour but de protéger les léchettes 12 des risques d'usure par contact avec l'élément de stator 16 qui les entoure. Les contacts avec les éléments abradables 18 peuvent être évités ou au contraire recherchés par exemple pour minimiser les jeux radiaux J autour des léchettes. Les types d'éléments abradables 18 et de léchettes 12 peuvent être adaptés en conséquence.

Cette technologie peut être utilisée pour assurer une étanchéité aux sommets des aubes d'une roue de rotor, ces aubes portant des léchettes annulaires, éventuellement sectorisées, qui sont entourées par des éléments abradables portés par un carter de stator (voir notamment FR-A1-3 001 759). Elle peut également être utilisée pour assurer une étanchéité entre une portion d'arbre ou de tourillon et un stator de la turbomachine. Le nombre et les dimensions des léchettes sont notamment fonction de l'espace radial disponible entre les éléments à étanchéifier.

En fonctionnement, comme cela est représenté aux figures 2 et 3, les léchettes 12 ont pour fonction de perturber le flux de gaz qui tente de s'écouler entre les éléments 14, 16 de l'amont vers l'aval, c'est-à-dire de gauche à droite dans les dessins. Cela crée des turbulences dans le flux de gaz qui génèrent des pertes de charge et améliorent ainsi l'étanchéité du joint.

Au niveau de chaque léchette 12 à franchir, le flux de gaz est perturbé une première fois lorsqu'il impacte le corps de la léchette (flèche F1). Le flux de gaz franchit le jeu entre le sommet de la léchette 12 et l'élément abradable 18 qui l'entoure, ce flux étant réduit de la valeur J grâce à la perturbation créée par la léchette, puis est perturbé une seconde fois (flèche F2) suite à l'augmentation brusque de la section de passage après traversée de la léchette. Plus le nombre de léchettes 12 est important, plus cela génère de turbulences dans le flux de gaz, et plus l'étanchéité du joint est améliorée.

La présente invention propose un perfectionnement à cette technologie pour améliorer l'étanchéité du joint d'étanchéité de façon simple, efficace et économique.

### EXPOSE DE L'INVENTION

L'invention propose un joint d'étanchéité à labyrinthe pour une turbomachine selon la revendication 1.

La présente invention peut utiliser seulement deux léchettes pour assurer l'étanchéité entre un rotor et un stator. Ces léchettes peuvent remplacer une multitude de léchettes annulaires adjacentes de la technique antérieure, ce qui est avantageux.

Les cavités de passage d'air sont situées entre les léchettes (ou entre deux parois annulaires, respectivement amont et aval, de la léchette lorsqu'on considère qu'elle est unique) et sont disposées circonférentiellement. Elles débouchent radialement vers l'extérieur, en regard de l'élément abradable et sont délimitées intérieurement par un fond ou une surface annulaire s'étendant entre les léchettes et qui est de préférence cylindrique.

Ces cavités définissent ou font partie de « baignoires » dans lesquelles des flux de gaz peuvent circuler et sont avantageusement perturbés ou pressurisés.

Au niveau de chaque léchette à franchir, le flux de gaz est perturbé une première fois lorsqu'il impacte le corps de la léchette amont. Le flux de gaz franchit le jeu radial au sommet de la léchette amont et pénètre et circule dans les cavités où il est perturbé une seconde fois et peut subir divers phénomènes (perturbations, pressurisation, tourbillons, etc.). Ces phénomènes créent des turbulences qui améliorent les performances du joint d'étanchéité. Le flux de gaz poursuit sa course puis est perturbé une troisième fois du fait notamment de l'augmentation de la section de passage après traversée de la léchette aval.

L'invention permet ainsi d'augmenter de manière significative le niveau d'étanchéité du joint.

Conformément à l'invention, lesdites cloisons peuvent s'étendre sensiblement axialement entre les léchettes et définir entre elles des secteurs d'espace de passage de gaz, lesdits secteurs d'espace étant découpés par des parois de séparation pour former lesdites cavités

Le joint selon l'invention peut comprendre une ou plusieurs des caractéristiques suivantes, prises isolément les unes des autres ou en combinaison les unes avec les autres :
- ledit élément de rotor est monobloc,
- au moins une des cavités est formée par plusieurs parois de séparation qui l'entourent,
- lesdites parois de séparation ont une hauteur ou dimension radiale par rapport audit axe au plus égale à celle desdites léchettes,
- lesdites léchettes et lesdites cloisons ont une même hauteur ou dimension radiale par rapport audit axe,
- lesdites léchettes comprennent une léchette amont et une léchette aval, la léchette amont comportant seule des ouvertures axiales de passage de gaz qui débouchent dans des cavités ou secteurs d'espace, ou les léchettes amont et aval comportant toutes les deux des ouvertures axiales de passage de gaz qui débouchent dans des cavités ou secteurs d'espace,
- la léchette amont comprend au moins une, de préférence une à trois, ouvertures de passage de gaz, qui débouche dans chaque cavité ou secteur d'espace,
- la léchette amont comprend une seule ouverture de passage de gaz qui débouche dans chaque cavité ou secteur d'espace, et la léchette aval comprend une seule ouverture de passage de gaz qui débouche dans chaque cavité ou secteur d'espace, ces ouvertures étant circonférentiellement décalées l'une de l'autre,
- ledit élément de rotor comprend un disque dont la périphérie externe est reliée à deux flasques annulaires, respectivement amont et aval, cette périphérie externe comportant une surface cylindrique externe sur lesquelles sont formées en saillie lesdites léchettes.

La présente invention concerne encore une turbomachine, caractérisée en ce qu'elle comprend au moins un joint tel que décrit cidessus.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi-vue schématique en coupe axiale d'un joint d'étanchéité à labyrinthe de turbomachine, selon la technique antérieure ;
- les figures 2 et 3 sont des vues schématiques à plus grandes échelles de détails de la figure 1 ;
- la figure 4 est une demi-vue schématique partielle en coupe axiale d'un joint d'étanchéité à labyrinthe de turbomachine, selon l'invention ;
- la figure 5 est une vue schématique en perspective et en coupe axiale d'un élément de rotor du joint de la figure 4 ;
- la figure 6 est une vue schématique de dessus de l'élément de rotor du joint de la figure 4 ;
- les figures 7 et 8 sont des vues similaires à celles des figures 5 et 6 et illustrant une variante de réalisation de l'invention ; et
- les figures 9 et 10 sont des vues similaires à celles des figures 5 et 6 et illustrant une autre variante de réalisation de l'invention.

### DESCRIPTION DETAILLEE

Les figures 1 à 3 ont été décrites dans ce qui précède.

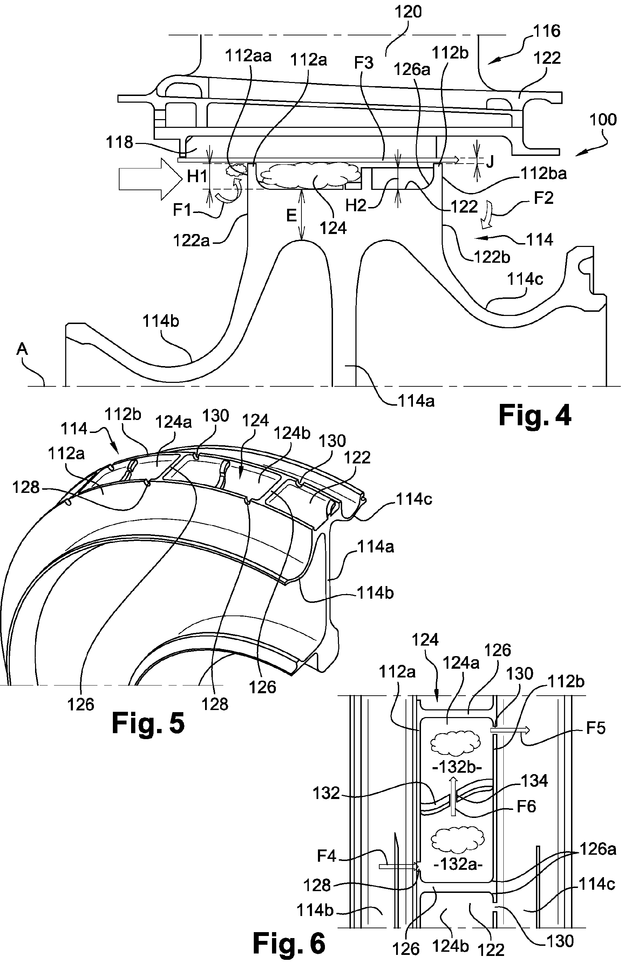

Les figures 4 à 6 représentent un premier mode de réalisation d'un joint 100 d'étanchéité à labyrinthe pour une turbomachine, en particulier d'aéronef.

Le joint 100 comporte un élément de rotor 114 tournant autour d'un axe de rotation, qui n'est pas visible et qui sera désigné par A, et un élément de stator 116 s'étendant autour de l'élément de rotor 114.

Dans l'exemple représenté, l'élément de stator 116 est un distributeur de turbine qui comprend deux viroles annulaires entre lesquelles s'étend une rangée annulaire d'aubes de stator 120. Seule la virole radialement interne 122 est ici visible. Cette virole a une forme générale cylindrique ou tronconique et porte à sa périphérie interne un élément annulaire abradable 118 qui entoure avec un faible jeu radial J l'élément de rotor 114.

Cet élément de rotor 114 est ici un disque de rotor qui peut être monobloc c'est-à-dire qu'il s'étend en continu sur 360° autour de son axe A. Il comprend une paroi annulaire 114a s'étendant autour de l'axe et ajourée en son centre. Comme cela est visible à la figure 5, cette paroi a en section une forme en « poireau », bien connue de l'homme du métier.

La paroi 114a est reliée à sa périphérie externe à deux flasques annulaires, respectivement amont 114b et aval 114c. Le flasque amont 114b a en section axiale une forme générale incurvée dont la concavité est orientée radialement vers l'extérieur par rapport à l'axe A. Le flasque 114b a une extrémité aval reliée à la périphérie externe de la paroi 114a et une extrémité amont libre qui peut être fixée à une roue de rotor située à l'amont de l'élément 114. Le flasque aval 114b a également en section axiale une forme générale incurvée dont la concavité est orientée radialement vers l'extérieur par rapport à l'axe A. Le flasque 114c a une extrémité amont reliée à la périphérie externe de la paroi 114a et une extrémité aval libre qui peut être fixée à une roue de rotor située à l'aval de l'élément 114.

La périphérie externe de la paroi 114a est surépaissie autant radialement que axialement dans l'exemple représenté de façon à définir une surface cylindrique radialement externe 122. Cette surface 122 a ici une dimension axiale L supérieure à l'épaisseur axiale minimale de la paroi 114a et sensiblement égale à l'épaisseur axiale maximale de cette paroi (figure 5). La périphérie externe de la paroi 114a a en outre une épaisseur radiale E supérieure à l'épaisseur radiale moyenne des flasques 114b, 114c, qui est par exemple mesurée à distance de leurs extrémités axiales.

Deux léchettes annulaires 112a, 112b sont formées en saillie sur la surface 122 et s'étendent radialement vers l'extérieur. Elles sont sensiblement parallèles entre elles et à un plan perpendiculaire à l'axe A. Elles sont situées respectivement aux extrémités axiales de la surface 122. La léchette amont 112a a une face radiale amont 112aa qui est alignée radialement avec une face radiale amont 122a de la périphérie externe de la paroi 114a. La léchette aval 112b a une face radiale aval 112ba qui est alignée radialement avec une face radiale aval 122b de la périphérie externe de la paroi 114a.

Les sommets ou extrémités radialement externes des léchettes sont séparés par le jeu J situé entre l'élément de rotor 116 et l'élément abradable 118.

Les léchettes 112a, 112b définissent entre elles un espace annulaire 124 qui est sectorisé et formé de plusieurs secteurs d'espace 124a, 124b, etc. isolés et disposés circonférentiellement les uns à côté des autres autour de l'axe A.

Les léchettes 112a, 112b sont reliées l'une à l'autre par des cloisons 126 qui sont ici parallèles entre elles et orientées axialement, c'est-à-dire parallèlement à l'axe A. Comme cela est visible aux figures 5 et 6, les cloisons 126 isolent les secteurs d'espace 124a, 124b les uns des autres.

Dans l'exemple représenté, les léchettes 112a, 112b et les cloisons 126 ont une même hauteur H1 ou dimension radiale, mesurée ici depuis la surface cylindrique 122. Les cloisons 126 ont donc leurs sommets qui sont séparés par le jeu J de l'élément abradable 118.

Les cloisons 126 peuvent être reliées aux léchettes 112a, 112b ainsi qu'à la surface 122 par des congés 126a (figures 5 et 6).

Un secteur d'espace 124a, 124b est ainsi délimité d'une part par des portions alignées axialement des léchettes 112a, 112b et d'autre part par deux cloisons 126 adjacentes s'étendant entre ces portions. Chaque secteur d'espace a ainsi une forme de « baignoire ».

Dans le mode de réalisation des figures 5 et 6, chaque secteur d'espace 124a, 124b est en communication fluidique d'une part vers l'amont, via une ouverture 128 prévue sur la léchette amont 112a, et d'autre part vers l'aval, via une ouverture 130 prévue sur la léchette aval 112b.

Les ouvertures 128, 130 sont ici formées par des encoches radiales s'étendant depuis les sommets des léchettes sur environ toutes leurs hauteurs. Les ouvertures 128, 130 ne sont pas alignées axialement mais sont au contraire décalées l'une de l'autre en direction circonférentielle, comme cela apparaît à la figure 6. L'ouverture 128 peut déboucher au voisinage de l'une des extrémités circonférentielles du secteur d'espace 124a, 124b, et l'autre ouverture 130 peut déboucher au voisinage de l'extrémité circonférentielle opposée de ce secteur d'espace.

L'ouverture 128 permet le passage de gaz en fonctionnement, de l'amont vers l'aval, suivant la flèche F4, donc depuis l'amont de la léchette amont 112a jusque dans le secteur d'espace 124a, 124b. L'ouverture 130 permet le passage de gaz en fonctionnement, de l'amont vers l'aval, suivant la flèche F5, donc depuis le secteur d'espace 124a, 124b jusqu'à l'aval de la léchette aval 112b.

A l'intérieur des secteurs d'espace 124a, 124b, des parois 132 de séparation sont prévues. Dans l'exemple représenté, chaque secteur d'espace comprend une paroi 132 qui a une forme générale ondulée et comprend une extrémité amont reliée à la face radiale aval de la léchette amont 112a et une extrémité aval reliée à la face radiale amont en regard de la léchette aval 112b. La paroi 132 est située sensiblement au milieu du secteur d'espace, en direction circonférentielle, et comprend un perçage 134 traversant orienté ici en direction sensiblement circonférentielle.

La paroi 132 a ici une hauteur radiale H2, mesurée depuis la surface 122, qui est inférieure à celle H1 des léchettes 112a, 112b et des cloisons 126. La paroi 132 sépare l'espace en deux cavités 132a, 132b en communication fluidique via le perçage 134.

Les formes et dimensions de la paroi 132 ainsi que du perçage 134 sont déterminées pour contrôler les perturbations du flux de gaz entrant et circulant dans chaque secteur d'espace.

Les ouvertures 128, 130 sont avantageusement calibrées. Les cavités 132a, 132b pourraient perdre leur coté curviligne ou réduire en espacement par endroit dans le but d'augmenter la pression entre deux formes afin d'expulser un flux de gaz plus comprimé entre le rotor et le stator. Les formes peuvent être aérodynamiques ou au contraire en pointe pour lisser le flux par endroit ou amplifier la perturbation à d'autres (suivant les besoins amont/aval).

Au niveau de la léchette 112a, le flux de gaz est perturbé une première fois lorsqu'il impacte le léchette (flèche F1). Une première partie du flux de gaz franchit le jeu radial au sommet des léchettes 112a, 112b (flèche F3) puis est perturbée une seconde fois suite à l'augmentation de la section de passage en aval des léchettes (flèche F2). Par ailleurs, une seconde partie du flux de gaz pénètre dans les secteurs d'espace 124a, 124b (flèche F4) et y circule en étant perturbé, ce qui génère des turbulences et impacte la première partie du flux de gaz, dont le débit est réduit.

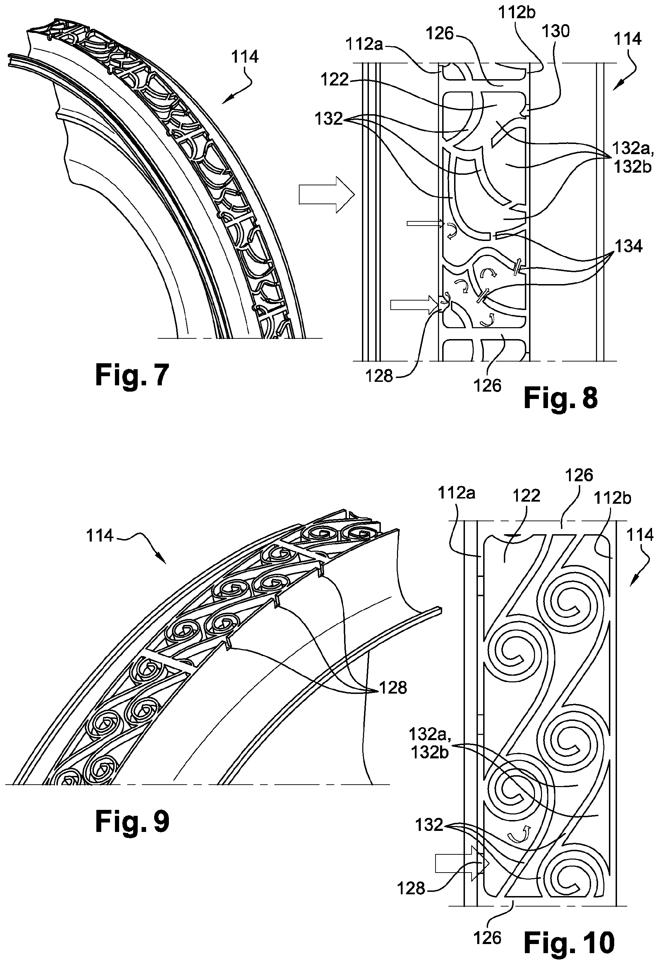

Les figures 7 et 8 illustrent un deuxième mode de réalisation de l'invention qui diffère du précédent mode de réalisation par les caractéristiques des parois 132 de séparation. Chaque secteur d'espace comprend un grand nombre de parois 132, par exemple supérieur à 5, qui ont des formes complexes et délimitent plusieurs cavités 132a, 132b, etc., dont le nombre peut également être supérieur à 5. Certaines des parois 132 comprennent des perçages pour la communication fluidique des cavités entre elles et pour l'acheminement du flux de gaz, depuis l'ouverture 128 jusqu'à l'ouverture 130 de chaque secteur d'espace. Les parois 132 ont ici une hauteur radiale identique à celle des léchettes et des cloisons.

Les figures 9 et 10 illustrent un troisième mode de réalisation de l'invention qui diffère du premier mode de réalisation notamment par les caractéristiques des parois 132 de séparation. Chaque secteur d'espace comprend un grand nombre de parois 132, par exemple supérieur à 5, qui ont chacune une forme générale en volute et qui délimitent chacune une cavité 132c en hélice, dont le nombre peut également être supérieur à 5. Dans l'exemple représenté, l'espace entre les léchettes 112a, 112b comprend deux rangées annulaires adjacentes de parois 132 en volute. Les parois 132 ne sont ici pas percées. Par ailleurs, seule la léchette amont 112a comprend des ouvertures 128, ici au nombre de trois par secteur d'espace 124a, 124b. La léchette aval 112b ne comprend ainsi pas d'ouvertures et les cavités 132c ne communiquent pas fluidiquement entre elles par des perçages des parois 132. Les gaz qui pénètrent dans les cavités 132c par les ouvertures 128 sont forcées de suivre la forme en volute ou hélice ce qui génère la formation de tourbillons dans chaque secteur d'espace, qui perturbe et limite le débit de fluide selon la flèche F3 de la figure 4.

## Revendications

1. Joint d'étanchéité à labyrinthe (100) pour une turbomachine, en particulier d'aéronef, comportant un élément de rotor (114) s'étendant autour d'un axe (A), et un élément de stator (116) s'étendant autour de l'élément de rotor (114), l'élément de rotor (114) comportant deux léchettes (112a, 112b) annulaires s'étendant radialement vers l'extérieur et entourées par au moins un élément abradable (118) porté par ledit élément de stator (116), plusieurs cavités (132a, 132b) de passage de gaz étant disposées circonférentiellement les unes à côté des autres entre les deux léchettes (112a, 112b), les deux léchettes (112a, 112b) étant reliées entre elles par des cloisons (126) de liaison, au moins une desdites léchettes (112a, 112b) comportant au moins une ouverture axiale (128, 130) de passage de gaz débouchant dans au moins certaines desdites cavités (132a, 132b), et lesdites cloisons (126) s'étendant sensiblement axialement entre les léchettes et définissent entre elles des secteurs d'espace (124a, 124b) de passage de gaz, **caractérisé en ce que** lesdits secteurs d'espace (124a, 124b) sont découpés par des parois (132) de séparation pour former lesdites cavités (132a, 132b).

2. Joint (100) selon la revendication précédente, dans lequel ledit élément de rotor est monobloc.

3. Joint (100) selon la revendication 1 ou 2, dans lequel au moins une des cavités (132a, 132b) est formée par plusieurs parois (132) de séparation qui l'entourent.

4. Joint (100) selon la revendication précédente, dans lequel lesdites parois (132) de séparation ont une hauteur (H2) ou dimension radiale par rapport audit axe (A) au plus égale à celle (H1) desdites léchettes (112a, 112b).

5. Joint (100) selon l'une des revendications 1 à 4, dans lequel lesdites léchettes (112a, 112b) et lesdites cloisons (126) ont une même hauteur (H1) ou dimension radiale par rapport audit axe (A).

6. Joint (100) selon l'une des revendications précédentes, dans lequel lesdites léchettes (112a, 112b) comprennent une léchette amont (112a) et une léchette aval (112b), la léchette amont (112a) comportant seule des ouvertures axiales (128) de passage de gaz qui débouchent dans des cavités (132a, 132b) ou secteurs d'espace (124a, 124b), ou les léchettes amont et aval (112a, 112b) comportant toutes les deux des ouvertures axiales (128, 130) de passage de gaz qui débouchent dans des cavités (132a, 132b) ou secteurs d'espace (124a, 124b).

7. Joint (100) selon la revendication précédente, dans lequel la léchette amont (112a) comprend au moins une, de préférence une à trois, ouvertures (128) de passage de gaz, qui débouche dans chaque cavité (132a, 132b) ou secteur d'espace (124a, 124b).

8. Joint (100) selon la revendication précédente, dans lequel la léchette amont (112a) comprend une seule ouverture (128) de passage de gaz qui débouche dans chaque cavité (132a, 132b) ou secteur d'espace (124a, 124b), et la léchette aval (112b) comprend une seule ouverture (130) de passage de gaz qui débouche dans chaque cavité (132a, 132b) ou secteur d'espace (124a, 124b), ces ouvertures étant circonférentiellement décalées l'une de l'autre.

9. Joint (100) selon l'une des revendications précédentes, dans lequel ledit élément de rotor (114) comprend un disque dont la périphérie externe est reliée à deux flasques annulaires (114a, 114b), respectivement amont et aval, cette périphérie externe comportant une surface cylindrique externe (122) sur lesquelles sont formées en saillie lesdites léchettes (112a, 112b).

10. Turbomachine, **caractérisée en ce qu'**elle comprend au moins un joint (100) selon l'une des revendications précédentes.

## Patentansprüche

1. Labyrinthdichtung (100) für eine Turbomaschine, insbesondere ein Luftfahrzeug, umfassend ein Rotorelement (114), das sich um eine Achse (A) erstreckt, und ein Statorelement (116), das sich um das Rotorelement (114) erstreckt, wobei das Rotorelement (114) zwei ringförmige Zungen (112a, 112b) umfasst, sich die radial nach außen erstrecken und von mindestens einem abreibbaren Element (118) umgeben sind, das von dem Statorelement (116) getragen wird, wobei mehrere Hohlräume (132a, 132b) zum Durchgang von Gas umfänglich nebeneinander zwischen den zwei Zungen (112a, 112b) angeordnet sind, wobei die zwei Zungen (112a, 112b) durch Verbindungszwischenwände (126) miteinander verbunden sind, wobei mindestens eine der Zungen (112a, 112b) mindestens eine axiale Öffnung (128, 130) zum Durchgang von Gas umfasst, die in mindestens einige der Hohlräume (132a, 132b) mündet, wobei die Zwischenwände (126) sich im Wesentlichen axial zwischen den Zungen erstrecken und untereinander Teilräume (124a, 124b) zum Durchgang von Gas definieren, **dadurch gekennzeichnet, dass** die Teilräume (124a, 124b) von Trennwänden (132) durchschnitten sind, um die Hohlräume (132a, 132b) zu bilden.

2. Dichtung (100) nach dem vorstehenden Anspruch, wobei das Rotorelement einstückig ist.

3. Dichtung (100) nach Anspruch 1 oder 2, wobei mindestens einer der Hohlräume (132a, 132b) durch mehrere Trennwände (132) gebildet wird, die ihn umgeben.

4. Dichtung (100) nach dem vorstehenden Anspruch, wobei die Trennwände (132) eine Höhe (H2) oder radiale Abmessung in Bezug auf die Achse (A) höchstens gleich jener (H1) der Zungen (112a, 112b) aufweisen.

5. Dichtung (100) nach einem der Ansprüche 1 bis 4, wobei die Zungen (112a, 112b) und die Zwischenwände (126) eine gleiche Höhe (H1) oder radiale Abmessung in Bezug auf die Achse (A) aufweisen.

6. Dichtung (100) nach einem der vorstehenden Ansprüche, wobei die Zungen (112a, 112b) eine stromaufwärtige Zunge (112a) und eine stromabwärtige Zunge (112b) umfassen, wobei nur die stromaufwärtige Zunge (112a) axiale Öffnungen (128) zum Durchgang von Gas umfasst, die in Hohlräume (132a, 132b) oder Teilräume (124a, 124b) münden, oder sowohl die stromaufwärtige als auch die stromabwärtige Zunge (112a, 112b) axiale Öffnungen (128, 130) zum Durchgang von Gas umfassen, die in Hohlräume (132a, 132b) oder Teilräume (124a, 124b) münden.

7. Dichtung (100) nach dem vorstehenden Anspruch, wobei die stromaufwärtige Zunge (112a) mindestens eine, vorzugsweise eine bis drei, Öffnungen (128) zum Durchgang von Gas umfasst, die in jeden Hohlraum (132a, 132b) oder Teilraum (124a, 124b) mündet.

8. Dichtung (100) nach dem vorstehenden Anspruch, wobei die stromaufwärtige Zunge (112a) eine einzige Öffnung (128) zum Durchgang von Gas umfasst, die in jeden Hohlraum (132a, 132b) oder Teilraum (124a, 124b) mündet, und die stromabwärtige Zunge (112b) eine einzige Öffnung (130) zum Durchgang von Gas umfasst, die in jeden Hohlraum (132a, 132b) oder Teilraum (124a, 124b) mündet, wobei diese Öffnungen umfänglich voneinander versetzt sind.

9. Dichtung (100) nach einem der vorstehenden Ansprüche, wobei das Rotorelement (114) eine Scheibe umfasst, deren Außenumfang stromabwärtig bzw. stromaufwärtig mit zwei ringförmigen Flanschen (114a, 114b) verbunden ist, wobei dieser Außenumfang eine zylindrische Außenfläche (122) umfasst, auf der die Zungen (112a, 112b) überstehend gebildet sind.

10. Turbomaschine, **dadurch gekennzeichnet, dass** sie mindestens eine Dichtung (100) nach einem der vorstehenden Ansprüche umfasst.

## Claims

1. A labyrinth sealing joint (100) for a turbomachine, in particular of an aircraft, comprising a rotor element (114) extending around an axis (A), and a stator element (116) extending around the rotor element (114), the rotor element (114) comprising two annular lips (112a, 112b) extending radially outwards and surrounded by at least one abradable element (118) carried by said stator element (116), a plurality of gas passage cavities (132a, 132b) being arranged circumferentially next to one another between the two lips (112a, 112b), the two lips (112a, 112b) being interconnected by connecting partitions (126), at least one of said lips (112a, 112b) comprising at least one axial gas passage opening (128, 130) that leads into at least some of said cavities (132a, 132b), and said partitions (126) extending substantially axially between the lips and defining therebetween sectors of spaces (124a, 124b) for gas passage, **characterized in that** said sectors of spaces (124a, 124b) are divided by separation walls (132) to form said cavities (132a, 132b).

2. The sealing joint (100) according to the preceding claim, wherein said rotor element is monobloc.

3. The sealing joint (100) according to claim 1 or 2, wherein at least one of the cavities (132a, 132b) is formed by a plurality of separation walls (132) that surround it.

4. The sealing joint (100) according to the preceding claim, wherein said separation walls (132) have a height (H2) or radial dimension with respect to said axis (A) at most equal to that (H1) of said lips (112a, 112b).

5. The sealing joint (100) according to one of claims 1 to 4, wherein said lips (112a, 112b) and said partitions (126) have the same height (H1) or radial dimension with respect to said axis (A).

6. The sealing joint (100) according to one of the preceding claims, wherein said lips (112a, 112b) comprise an upstream lip (112a) and a downstream lip (112b), only the upstream lip (112a) comprising axial gas passage openings (128) which lead into cavities (132a, 132b) or sectors of spaces (124a, 124b), or the upstream and downstream lips (112a, 112b) both comprising axial gas passage openings (128, 130) that lead into cavities (132a, 132b) or sectors of space (124a, 124b).

7. The sealing joint (100) according to the preceding claim, wherein the upstream lip (112a) comprises at least one, preferably one to three, gas passage openings (128) which lead into each cavity (132a, 132b) or sector of space (124a, 124b).

8. The sealing joint (100) according to the preceding claim, wherein the upstream lip (112a) comprises a single gas passage opening (128) which leads into each cavity (132a, 132b) or sector of space (124a, 124b), and the downstream lip (112b) comprises a single gas passage opening (130) which leads into each cavity (132a, 132b) or sector of space (124a, 124b), these openings being circumferentially offset from each other.

9. The sealing joint (100) according to one of the preceding claims, wherein said rotor element (114) comprises a disc whose outer periphery is connected to two annular flanges (114a, 114b), respectively upstream and downstream, this outer periphery comprising an outer cylindrical surface (122) on which said lips (112a, 112b) are protrudingly formed.

10. A turbomachine, **characterized in that** it comprises at least one sealing joint (100) according to one of the preceding claims.
